# FASCICULE DE BREVET EUROPEEN

(11) **EP 3 661 733 B1**
(45) Date de publication et mention de la délivrance du brevet: **14.06.2023**
(21) Numéro de dépôt: 18737636.3
(22) Date de dépôt: 13.07.2018
(51) Int. Cl.: B29C 65/64, B29C 65/60, B29C 65/82, B29L 31/00, B29L 31/30

(54) **PROCÉDÉ D'ASSEMBLAGE D'UNE PIÈCE MÉTALLIQUE AVEC UNE PIÈCE COMPOSITE ET ASSEMBLAGE DE PIÈCES CORRESPONDANT**
VERFAHREN ZUM ZUSAMMENBAU EINES METALLTEILS MIT EINEM VERBUNDTEIL UND ENTSPRECHENDER ZUSAMMENBAU VON TEILEN
METHOD FOR ASSEMBLING A METAL PART WITH A COMPOSITE PART AND CORRESPONDING ASSEMBLY OF PARTS

(30) Priorité: 03.08.2017 FR 1770825
(43) Date de publication de la demande: 10.06.2020
(73) Titulaire: Safran Seats, 78370 Plaisir (FR)
(72) Inventeur: CAILLETEAU, Jérémy, 36120 Saint Août (FR); MEYER, Thomas, 38330 Saint Ismier (FR)
(74) Mandataire: Marconnet, Sébastien
(86) Numéro de dépôt international: PCT/EP2018/069079
(87) Numéro de publication internationale: WO 2019/025159

(56) Documents cités:
- DE-A1-102013 205 745
- FR-A1- 3 021 899
- US-A1- 2013 149 501
- US-B1- 7 802 799

## Description

La présente invention est relative à un procédé d'assemblage d'une pièce métallique avec une pièce réalisée dans un matériau composite et à un assemblage de pièces correspondant.

Dans le cadre de la fabrication d'un produit, il peut être nécessaire de réaliser des assemblages structurels entre une pièce métallique et une pièce réalisée dans un matériau composite comprenant des fibres noyées dans une matrice en matériau polymère. L'assemblage entre les deux pièces peut être réalisé, par exemple, par collage ou par l'intermédiaire d'un insert de fixation.

Le document FR3021899 décrit un assemblage entre une plaque métallique et une plaque constituée d'un matériau composite à renfort fibreux. Une face d'assemblage de la pièce métallique comporte des formes d'accouplement consistant en une pluralité de picots sensiblement perpendiculaires à la face d'assemblage. En outre, une couche, dite couche de verrouillage, constituée d'un matériau comportant une matrice polymère, est surmoulée sur l'assemblage.

Un tel procédé présente toutefois l'inconvénient de réaliser une opération d'injection pour obtenir la couche supplémentaire de verrouillage. Une telle opération d'injection est longue à mettre en oeuvre et induit des coûts de fabrication importants.

De plus, l'assemblage de pièces obtenu selon un tel procédé ne présente pas une tenue mécanique suffisante pour des usages spécifiques nécessitant de supporter des efforts importants.

Le document FR3021899 décrit un ensemble comprenant une première pièce constituée d'un matériau composite à matrice polymère et une deuxième pièce métallique, assemblées selon des faces d'assemblage. La première pièce est constituée par un matériau composite comprenant des fibres de renfort continues dans une matrice thermoplastique. La deuxième pièce comporte, sur sa face d'assemblage, une forme d'accouplement, comprenant une pluralité de motifs.

Le document US7802799 décrit un procédé pour assembler un élément métallique à une structure à matrice composite. Une ou plusieurs surfaces de l'élément métallique sont pourvues d'une pluralité de plots faisant saillie vers l'extérieur.

Le document DE102013205745 décrit un procédé d'assemblage entre un premier composant et un deuxième composant, le deuxième composant étant en matière plastique renforcée de fibres.

Le document US2013/149501 décrit un procédé d'assemblage entre un composant composite comprenant des fibres et un composant structurel d'un avion. Une feuille métallique est prévue comme élément de renforcement transversal entre le composant composite et le composant structurel.

La présente invention vise à remédier efficacement à ces inconvénients en proposant un procédé d'assemblage entre une première pièce, métallique, et une deuxième pièce, constituée d'un matériau composite comprenant au moins une matrice, notamment en polymère, et des fibres agencées à l'intérieur de la matrice.

Plus spécifiquement, la première pièce et la deuxième pièce sont destinées à être assemblées suivant leur face de contact.

Le procédé comporte au moins:
- une étape de formage de la première pièce, consistant en une réalisation d'une pluralité de dents s'étendant en saillie par rapport à une face de contact de la première pièce, deux dents adjacentes étant séparées entre elles par un espace interstitiel, les dents présentant une excroissance extrémale, et
- une étape de pressage de la deuxième pièce contre la première pièce, de telle façon que les fibres puissent pénétrer à l'intérieur des espaces interstitiels définis entre des dents adjacentes de la première pièce et que les fibres soient retenues par les excroissances extrémales des dents.

Selon une mise en oeuvre, le procédé comporte en outre:
- une étape de chauffage de la deuxième pièce, réalisée avant l'étape de pressage, et/ou
- une étape de refroidissement réalisée après l'étape de pressage mécanique, notamment destinée à permettre la consolidation de l'assemblage entre la première pièce et la deuxième pièce,

Selon une mise en oeuvre, l'étape de refroidissement est effectuée sous pression.

Selon une mise en oeuvre, l'étape de chauffage de la deuxième pièce peut être réalisée par infrarouges, ultrason, ou induction, ou à l'aide d'une étuve.

La présente invention a également pour objet un assemblage comportant une première pièce, métallique, et une deuxième pièce, constituée d'un matériau composite comprenant au moins une matrice, notamment en polymère, et des fibres agencées à l'intérieur de la matrice. Selon une variante de réalisation, la première pièce et la deuxième pièce sont susceptibles d'être assemblées suivant leur face de contact.

Plus spécifiquement, la première pièce comporte une pluralité de dents s'étendant en saillie depuis une base en liaison avec une face de contact de la première pièce et comprenant une extrémité libre, opposée à la base, présentant une excroissance extrémale. L'excroissance extrémale forme un moyen de retenue des fibres du matériau composite lorsque la première pièce et la deuxième pièce sont assemblées.

De plus, la dent peut comporter au moins une protubérance circonférentielle.

Par ailleurs, l'extrémité libre de la dent peut présenter une largeur supérieure à une largeur d'une partie centrale de la dent et/ou la largeur de la partie centrale de la dent est inférieure à une largeur de la base de la dent.

De plus, deux dents adjacentes peuvent être séparées entre elles par un espace interstitiel. L'espace interstitiel est apte à recevoir des fibres du matériau composite lorsque la première pièce et la deuxième pièce sont assemblées.

De plus, l'espace interstitiel peut présenter une largeur minimale au niveau de l'extrémité libre de la dent et/ou au moins un rétrécissement de largeur dans une direction d'extension de la dent.

Selon une mise en oeuvre, la première pièce comprend une ouverture traversante. L'ouverture traversante autorise un fluage de la matrice du matériau composite au travers de celle-ci. Une telle caractéristique permet de renforcer la liaison mécanique entre la première pièce et la deuxième pièce.

Dans ce cas, les dents sont avantageusement issues d'un bord de l'ouverture traversante et/ou sont espacées angulairement entre elles de façon régulière suivant une circonférence de l'ouverture.

Dans une telle configuration, les dents sont avantageusement espacées angulairement entre elles de façon régulière suivant une circonférence de l'ouverture traversante.

Alternativement, les dents pourront être issues d'un bord d'extrémité libre de la première pièce.

Selon un autre mode de réalisation, la dent est prolongée par une pointe disposée à l'extrémité libre de la dent.

Selon une mise en oeuvre, l'assemblage entre la première pièce et la deuxième pièce est réalisé suivant au moins une zone d'accrochage ponctuelle ou une zone d'accrochage linéaire.

Selon une réalisation particulière de la présente invention, la première pièce et la deuxième pièce sont des pièces d'un siège d'avion.

La présente invention permet ainsi, grâce à la forme des dents, de relier structurellement la pièce composite à la pièce métallique tout en assurant une retenue efficace des fibres à l'intérieur des espaces interstitiels lors de l'application d'un effort sur les pièces assemblées.

De plus, le procédé selon la présente invention est économique en étant basé sur la réalisation simple de dents par poinçonnage, découple laser, ou emboutissage.

La présente invention présente également l'intérêt de ne pas avoir à utiliser de matière additionnelle (colle, insert intermédiaire ou couche de surmoulage) pour assurer un assemblage et de ne pas nécessiter de préparation de surface.

Par rapport aux procédés basés sur la mise en place d'un insert, la présente invention permet en outre un gain en poids en assurant un assemblage direct entre la pièce composite et la pièce métallique sans élément intermédiaire.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- les figures 1a et 1b sont des vues de côté d'une pièce composite et d'une pièce métallique, respectivement avant et après assemblage;
- la figure 2 est une vue en perspective de dents réalisées sur une face de la pièce métallique selon la présente invention;
- la figure 3 est une vue schématique de côté illustrant l'insertion de fibres à l'intérieur des espaces interstitiels entre les dents ménagés sur la face de la pièce métallique de l'assemblage selon la présente invention;
- la figure 4 est une vue en perspective d'une couche de fibres de la pièce composite utilisée dans l'assemblage selon la présente invention;
- la figure 5 est une représentation graphique de l'évolution de la température d'une pièce en matériau composite en fonction du temps lors d'une étape de chauffe;
- les figures 6a et 6b sont des vues en perspective de variantes de réalisation de dents réalisées sur une face de la pièce métallique selon la présente invention;
- la figure 7 est un diagramme des différentes étapes d'un procédé d'assemblage entre une pièce métallique et une pièce constituée d'un matériau composite selon la présente invention;
- les figures 8a à 8c illustrent les étapes d'assemblage de la pièce constituée d'un matériau composite avec la pièce métallique selon la présente invention; et
- la figure 9 est une vue en perspective de l'assemblage de la pièce constituée d'un matériau composite et la pièce métallique selon la présente invention.

Il est à noter que, sur les figures, les éléments structurels et/ou fonctionnels communs aux différents modes de réalisation présentent les mêmes références. Ainsi, sauf mention contraire, de tels éléments disposent de propriétés structurelles, dimensionnelles, et matérielles identiques.

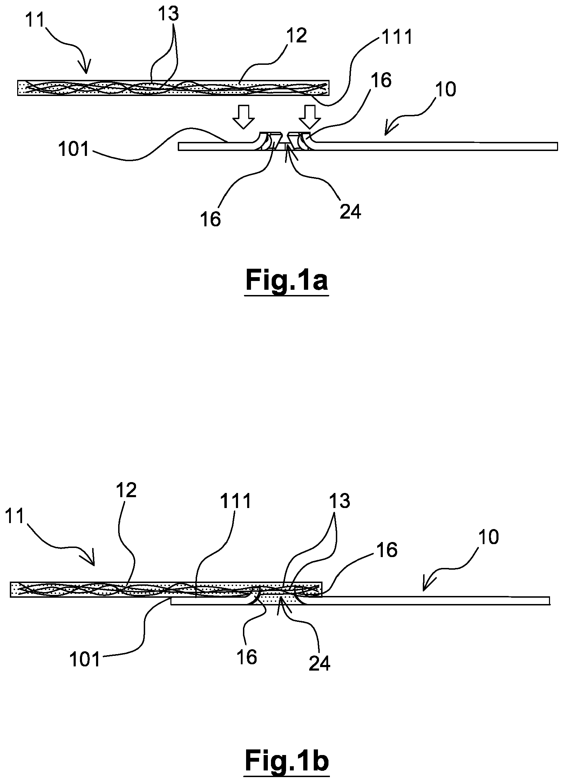

Les figures 1a et 1b illustrent un assemblage selon la présente invention entre une première pièce 10, réalisée dans un matériau métallique, et une deuxième pièce 11, constituée d'un matériau composite. Le matériau composite de la deuxième pièce 11 comprend au moins une matrice 12, notamment un polymère, et des fibres 13 agencées à l'intérieur de la matrice 12.

La première pièce 10, ou pièce métallique 10, comprend au moins une face de contact 101. La deuxième pièce 11, ou pièce composite 11, comprend au moins une face de contact 111. Selon la présente invention, la pièce métallique 10 et la pièce composite 11 sont destinées à être assemblées suivant leur face de contact 101, 111 en recouvrement l'une avec l'autre. La pièce métallique 10 est ainsi destinée à venir en contact avec la pièce composite 11 par sa face de contact 101 ; et la pièce composite 11 est destinée à venir en contact avec la pièce métallique 10 par sa face de contact 111.

De plus, la pièce métallique 10 comporte une pluralité de dents 16 s'étendant en saillie par rapport à la face de contact 101 de la pièce métallique 10. Préférentiellement, les dents 16 s'étendent en saillie suivant une direction perpendiculaire à la face de contact 101 de la pièce métallique 10. Lorsque la pièce métallique 10 et la pièce composite 11 sont disposées afin d'être assemblées entre elles, les dents 16 sont dirigées vers la pièce composite 11.

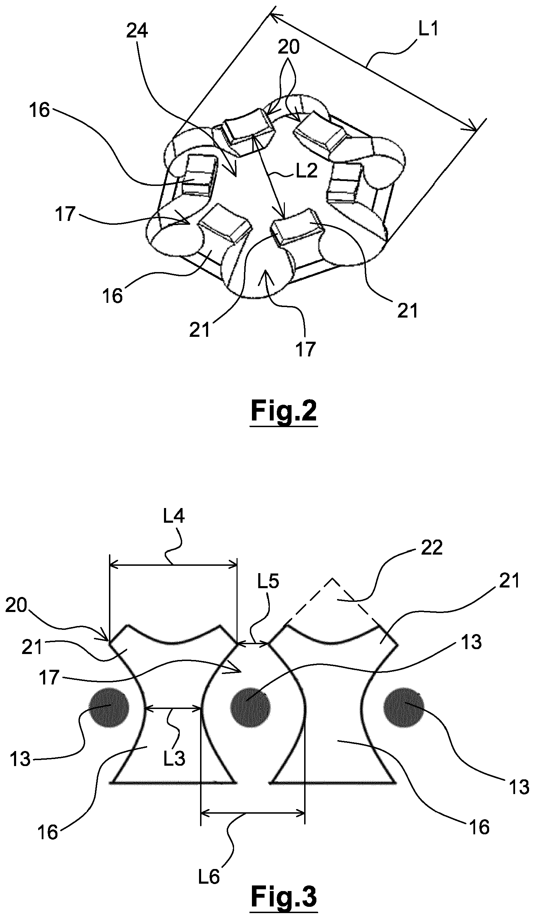

Tel que cela est visible notamment sur les figures 2 et 3, deux dents 16 adjacentes de la pièce métallique 10 sont séparées entre elles par un espace interstitiel 17. L'espace interstitiel 17 est notamment destiné à permettre le passage des fibres 13 de la pièce composite 11.

Par ailleurs, la dent 16 présente avantageusement une excroissance extrémale 20 apte à permettre de retenir les fibres 13 à l'intérieur de l'espace interstitiel 17 immédiatement voisin. L'excroissance extrémale 20 forme ainsi un moyen de retenue avantageusement situé à une l'extrémité libre de la dent 16, disposée à l'opposée à une base de la dent 16 en liaison avec la face de contact 101 de la pièce métallique 10. Ainsi, la dent 16 s'étend selon une direction d'extension de la dent de la base vers l'extrémité libre de celle-ci.

Préférentiellement, l'excroissance extrémale 20 est réalisée pour minimiser la perte de volume pour éviter un décompactage du matériau composite de la pièce composite 11. Toutefois, il serait également possible de prévoir une forme dans les outillages pour favoriser le compactage. A cet effet, un premier outil est conformé pour plaquer les fibres 13 contre la pièce métallique 10 et un second outil est conformé pour limiter au maximum le fluage de la matrice de la pièce composite 11 à l'intérieur d'une ouverture 24 décrite plus en détail ci-après.

Dans l'exemple représenté sur les figures 2 et 3, chaque dent 16 comporte des protubérances circonférentielles 21. Les protubérances circonférentielles 21 correspondent à un élargissement local de la dent 16. Avantageusement, la dent 16 comprend des protubérances circonférentielles 21 s'étendant circonférentiellement de part et d'autre de la dent 16.

Du fait d'une telle configuration, la dent 16 présente une largeur plus grande du côté de leur extrémité libre que dans leur partie centrale. Ainsi, une largeur de l'espace interstitiel 17 entre deux dents 16 a tendance à diminuer lorsque l'on se déplace de la partie centrale de l'espace interstitiel 17 vers une ouverture supérieure de l'espace interstitiel 17 situé du côté de l'extrémité libre des dents 16.

Avantageusement, les dents 16 sont issues d'un bord d'une ouverture traversante 24 réalisée dans la pièce métallique 10. Ce bord se situe dans l'épaisseur de la pièce 10.

Lors de l'assemblage de la pièce métallique 10 et de la pièce composite 11, la matrice 12 du matériau composite vient fluer dans l'ouverture traversante 24 de la pièce métallique 10. Le fluage de la matrice 12 du matériau composite dans l'ouverture traversante 24 de la pièce métallique 10 permet de renforcer la liaison entre la pièce métallique 10 et la pièce composite 11.

En outre, selon un exemple de réalisation, les dents 16 sont issues d'un bord délimitant l'ouverture traversante 24 de la pièce métallique 10. Ainsi, il existe une continuité de matière entre les dents 16 et le bord délimitant l'ouverture traversante 24. Avantageusement, mais cela n'est pas indispensable, les dents 16 sont espacées angulairement entre elles de façon régulière suivant une circonférence de l'ouverture traversante 24 de la pièce métallique 10. Une telle répartition des dents 16 permet une transmission d'efforts normaux et tangentiels à 360 degrés.

Par ailleurs, les dents 16 sont avantageusement disposées de façon symétrique, de sorte qu'il existe une invariance en rotation du motif formé par les dents 16. Plus précisément, l'invariance en rotation est observable lorsque l'on fait tourner le motif d'un angle égal à 360 degrés divisé par le nombre de dents, égal à 6 selon l'exemple présenté à la figure 2.

Bien entendu, le nombre de dents 16, et donc l'ordre de l'invariance en rotation du motif, pourra varier et être adapté en fonction de l'application et, en particulier, du niveau des efforts à supporter.

Dans un mode de réalisation particulier illustré par des traits discontinus sur la figure 3, l'extrémité libre de la dent 16 peut se terminer par une pointe 22. La forme en pointe 22 de la dent 16 permet d'améliorer la pénétration de la dent 16 à l'intérieur du matériau composite, notamment à l'intérieur des espaces entre les fibres 13 du matériau composite.

Dans un mode de réalisation tel que montré sur la figure 2, l'ouverture traversante 24 peut présenter :
- un diamètre externe L1, mesuré au niveau du fond des espaces interstitiels 17, et
- un diamètre interne L2, mesuré au niveau d'une périphérie interne des dents 16.

Selon un exemple non limitatif, le diamètre externe L1 peut être de l'ordre de 12.5mm plus ou moins 0.5mm et/ou le diamètre interne L2 peut être de l'ordre de 4.5mm plus ou moins 0.5mm.

Dans une définition particulière telle que montrée sur la figure 3, la dent 16 peut présenter :
- une largeur minimale L3, mesurée au niveau de la largeur la plus petite de la dent 16, par exemple au niveau de la partie centrale de la dent 16, et
- une largeur maximale L4, mesurée au niveau de la largeur la plus grande de la dent 16, par exemple au niveau de l'extrémité libre de la dent 16.

Selon un exemple non limitatif, la largeur minimale L3 peut être de l'ordre de 1mm plus ou moins 0.5mm et/ou la largeur maximale L4 peut être de l'ordre de 2.7mm plus ou moins 0.5mm.

Dans une alternative de réalisation telle que montrée sur la figure 3, l'espace interstitiel 17 peut présenter :
- une largeur minimale L5, mesurée au niveau de la largeur la plus petite de l'espace interstitiel 17, par exemple au niveau de l'extrémité libre de la dent 16, et
- une largeur maximale L6, mesurée au niveau de la largeur la plus grande de l'espace interstitiel 17, par exemple au niveau de la partie centrale de la dent 16.

Selon un exemple non limitatif, la largeur minimale L5 peut être comprise entre 1 et 20 fois, de préférence entre 1 et 5 fois, un diamètre moyen des fibres 13 du matériau composite de la deuxième pièce 11 et/ou la largeur maximale L6 peut être comprise entre 1 et 100 fois, de préférence entre 1 et 10 fois, le diamètre des fibres 13 du matériau composite de la deuxième pièce 11.

De plus, la largeur minimale L5 de l'espace interstitiel 17 peut être de l'ordre de 1 mm plus ou moins 0.5mm et/ou la largeur maximale L6 de l'espace interstitiel 17 peut être de l'ordre de 2mm, plus ou moins 1mm.

Avantageusement, une hauteur de la dent 16 est sensiblement égale ou légèrement inférieure à une épaisseur de la pièce composite 11.

Par ailleurs, la matrice 12 du matériau composite de la deuxième pièce 11 est réalisée dans un matériau polymère, en particulier un matériau polymère thermoplastique, notamment en polycarbonate thermoplastique, en PPS (polysulfure de phénylène), en PEEK (polyétheréthercétone), en PEI (polyétherimide), ou en polyamide. En variante, la matrice 12 du matériau composite de la deuxième pièce 11 pourra toutefois être réalisée dans un matériau polymère thermodurcissable.

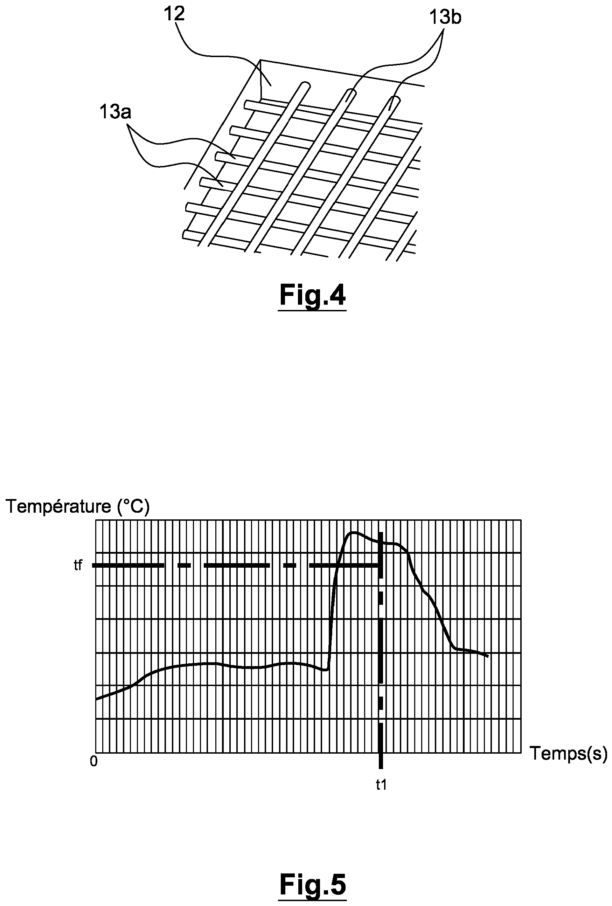

De préférence, le matériau composite de la deuxième pièce 11 comprend des fibres 13, notamment de type satin, par exemple de type 8H satin weave, sergé, taffetas, disposées selon un maillage de fibres dans lequel les fibres 13 sont entrelacées entre elles, comme cela est illustré sur la figure 4.

On distingue un premier ensemble de fibres 13a, dans lequel les fibres 13 sont avantageusement parallèles entre elles, et un deuxième ensemble de fibres 13b, dans lequel les fibres 13 sont avantageusement parallèles entre elles et/ou perpendiculaires aux fibres du premier ensemble de fibres 13a. Dans un exemple de réalisation, on utilise quatre couches de fibres 13, par exemple présentant une épaisseur de 0.5mm, soit une épaisseur totale de 2mm. En variante, les fibres 13 peuvent être selon un agencement tricoté, tissé ou non tissé. Dans le cas où les fibres sont tissées, toutes les armures peuvent être utilisées.

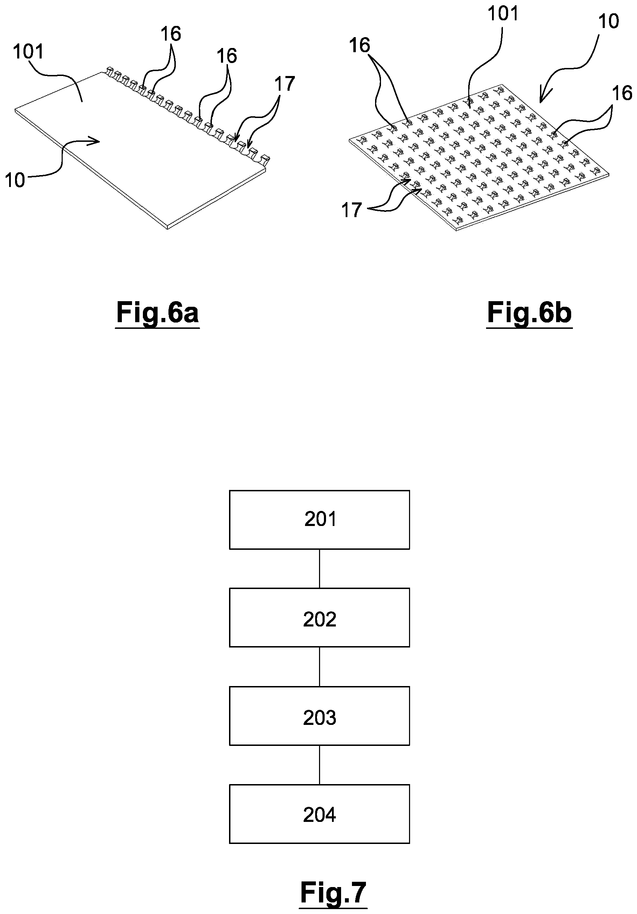

On décrit ci-après, en référence avec la figure 7, les différentes étapes d'un exemple de mise en oeuvre d'un procédé d'assemblage entre la pièce métallique 10 et la pièce composite 11 selon la présente invention. La pièce métallique 10 pourra, par exemple, être une pièce en aluminium présentant l'avantage d'être aisément déformable pour réaliser les formes souhaitées.

Dans une première étape 201, ou étape de formage 201, les dents 16 et/ou l'ouverture traversante 24 de la pièce métallique 10 sont réalisées, par exemple, par estampage, poinçonnage 3D, découpe poinçonnage 2D ou laser, et/ou emboutissage. La première étape 201 permet de former les dents 16 de façon à ce qu'elles s'étendent en saillie par rapport à la face de contact 101 de la pièce métallique 10.

Au cours d'une deuxième étape 202, ou étape de chauffage 202, la pièce composite 11 est chauffée jusqu'à atteindre une température tf située entre une température de transition vitreuse et une température de fusion du matériau composite. La température tf est par exemple obtenue à un instant t1, La température tf est telle que le matériau composite, en particulier la matrice, est suffisamment ramolli pour être pénétré par les dents 16. La température tf, qui dépend du matériau composite, est généralement supérieure à 200°C.

L'étape de chauffage 202 pourra être effectuée au moyen d'un four, par infrarouges, ultrason, ou induction, ou à l'aide d'une étuve.

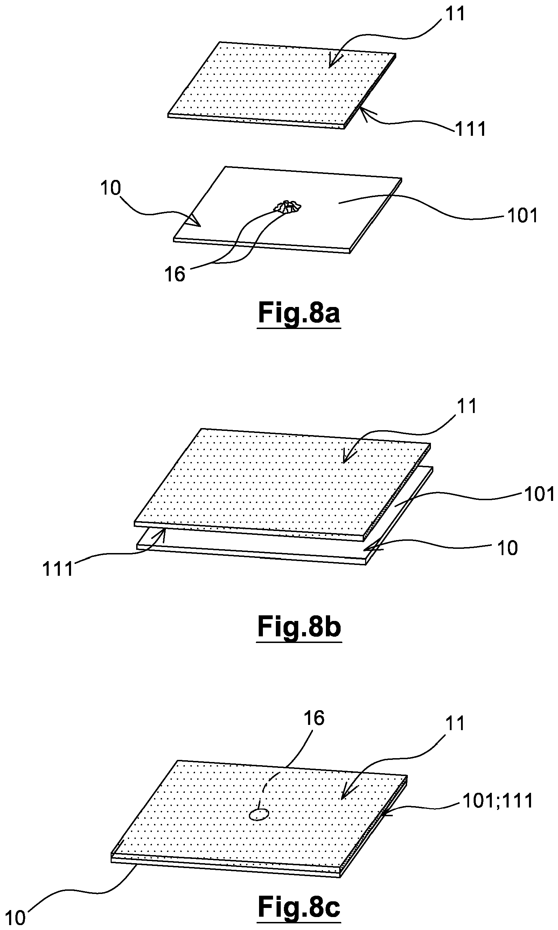

Comme cela est illustré sur les figures 8a à 8c, alors que la matrice 12 de la pièce composite 11 se trouve dans un état visqueux à l'issue de l'étape de chauffage 202, une troisième étape 203, ou étape de pressage 203, notamment une étape de pressage 203 mécanique, permet d'assurer la pénétration des dents 16 à l'intérieur des espaces entre les fibres 13 de la pièce composite 11, de sorte que les fibres 13 du matériau composite viennent s'insérer à l'intérieur des espaces interstitiels 17. En outre, la matrice 12 flue de manière à combler les espaces interstitiels 17 et l'ouverture 24 lors de la compression. L'étape de pressage 203 est, par exemple, effectuée sous une pression comprise avantageusement entre 5 et 10 bars.

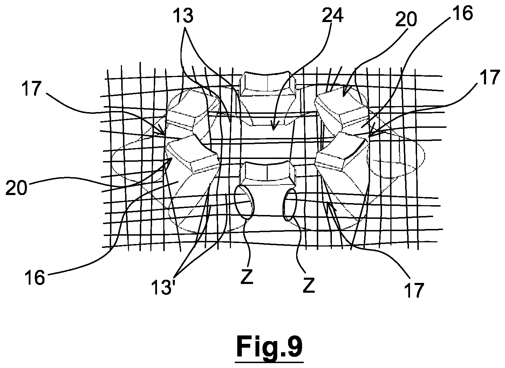

Tel que présenté à la figure 9, la pénétration des dents 16 à l'intérieur des espaces entre les fibres 13 de la pièce composite 11 a pour conséquence que les fibres 13 se sont déplacées les unes par rapport aux autres et se sont regroupées et concentrées localement dans des zones Z situées en bordure de dents 16. En outre, on remarque qu'une même fibre, telles que les fibres référencées 13' sur la figure 9, peut interagir avec plusieurs dents 16 (trois dents dans l'exemple représenté) qui participent donc à une retenue mécanique.

Par suite, une quatrième étape 204, ou étape de refroidissement 204, permet de consolider l'assemblage entre la pièce métallique 10 et la pièce composite 11. Préférentiellement, l'étape de refroidissement 204 est très courte pour obtenir un assemblage rigide. La durée de l'étape de refroidissement peut ainsi par exemple être inférieure à 30 secondes. Avantageusement, l'étape de refroidissement 204 est mise en oeuvre en conservant une pression d'application, notamment identique à celle exercée lors de l'étape de pressage 203.

Il est à noter que l'assemblage selon le procédé décrit ci-dessus ne nécessite pas de préparation de surface spécifique de la pièce composite 11 et/ou de la pièce métallique 10.

On observe également que, dans le cas où la matrice 12 est réalisée dans un matériau polymère thermodurcissable, il est possible de supprimer l'étape de chauffage 202 et/ou l'étape de refroidissement 204 de la pièce composite 11.

La tenue mécanique obtenue grâce au procédé selon la présente invention est équivalente ou supérieure à celle d'un assemblage par collage ou rivetage.

La tenue mécanique de l'assemblage ainsi obtenu est de l'ordre de 150 daN en traction et 500 daN en cisaillement. Une telle tenue mécanique est supérieure à celle obtenue avec les procédés intégrant:
- un surmoulage d'une couche de verrouillage, qui a une tenue de l'ordre de 60daN en traction et 100 daN en cisaillement,
- une utilisation d'inserts standards dans des panneaux composites, qui a une tenue de l'ordre de 144 daN en cisaillement et 200 daN en cisaillement, ou
- un assemblage par collage qui a une tenue de l'ordre de 75daN en traction et 450daN en cisaillement.

Avantageusement, la pièce métallique 10 et la pièce composite 11 sont des pièces de siège d'avion.

Dans l'exemple des figures 1a, 1b, 2, et 3, les dents 16 sont réalisées suivant une configuration dite ponctuelle, c'est-à-dire qu'elles sont issues d'un bord interne d'une ouverture traversante 24 de faible diamètre ménagée dans la pièce métallique 10.

En variante non conforme à l'invention, comme cela est illustré sur la figure 6a, les dents 16 s'étendent suivant une zone, notamment linéaire. Les dents 16 sont en l'occurrence issues, par continuité de matière, d'un bord d'extrémité libre de la pièce métallique 10 délimitant un côté de la pièce 10. Le bord d'extrémité portant les dents 16 s'étend dans l'épaisseur de la pièce 10 et forme un angle non nul avec la face de contact 101. Sur la figure 6a, le bord de la pièce métallique 10 est rectiligne mais il pourrait en variante présenter une forme quelconque.

De préférence, mais cela n'est pas indispensable, les dents 16 sont espacées entre elles de façon régulière. Les espaces interstitiels 17 sont avantageusement configurés de la même façon que précédemment pour retenir les fibres 13 entre les dents 16.

Dans la pièce métallique non conforme à l'invention de la figure 6b, les dents 16 s'étendent suivant une surface de la pièce métallique 10. Les espaces interstitiels 17 sont configurés de la même façon que précédemment pour retenir les fibres 13 entre les dents 16.

Bien évidemment, l'invention n'est pas limitée aux modes de réalisation décrits précédemment et fournis uniquement à titre d'exemple.

## Revendications

1. Procédé d'assemblage entre une première pièce (10), métallique, et une deuxième pièce (11), constituée d'un matériau composite comprenant au moins une matrice (12) et des fibres (13) agencées à l'intérieur de la matrice (12),
ledit procédé comportant au moins:
- une étape de formage (201) de la première pièce (10), consistant en une réalisation d'une pluralité de dents (16) s'étendant en saillie par rapport à une face de contact (101) de la première pièce (10), , deux dents (16) adjacentes étant séparées entre elles par un espace interstitiel (17), les dents (16) présentant une excroissance extrémale (20), et
- une étape de pressage (203) de la deuxième pièce (11) contre la première pièce (10),
de telle façon que les fibres (13) du matériau composite puissent pénétrer à l'intérieur des espaces interstitiels (17) définis entre des dents (16) adjacentes, et que les fibres (13) soient retenues par les excroissances extrémales des dents (16),
**caractérisé en ce que** les dents (16) sont issues d'un bord d'une ouverture traversante (24) réalisée dans la première pièce (10).

2. Procédé d'assemblage selon la revendication 1, **caractérisé en ce qu'**il comporte en outre:
- une étape de chauffage (202) de la deuxième pièce (11) réalisée avant l'étape de pressage (203), et/ou
- une étape de refroidissement (204) réalisée après l'étape de pressage (204).

3. Procédé d'assemblage selon la revendication 2, **caractérisé en ce que** l'étape de refroidissement (204) est effectuée sous pression.

4. Assemblage comportant une première pièce (10), métallique, et une deuxième pièce (11), constituée d'un matériau composite comprenant au moins une matrice (12) et des fibres (13) agencées à l'intérieur de la matrice (12),
- la première pièce (10) comportant une pluralité de dents (16) s'étendant en saillie depuis une base en liaison avec une face de contact (101) de la première pièce (10) et comprenant une extrémité libre, opposée à la base, présentant une excroissance extrémale (20), **caractérisé en ce que** les dents (16) sont issues d'un bord d'une ouverture traversante (24) réalisée dans la première pièce (10).

5. Assemblage selon la revendication 4, **caractérisé en ce que** la dent (16) comporte au moins une protubérance circonférentielle (21).

6. Assemblage selon la revendication 5, **caractérisé en ce que** l'extrémité libre de la dent (16) présente une largeur (L4) supérieure à une largeur (L3) d'une partie centrale de la dent (16).

7. Assemblage selon la revendication 6, **caractérisé en ce que** la largeur (L3) de la partie centrale de la dent (16) est inférieure à une largeur de la base de la dent (16).

8. Assemblage selon l'une quelconque des revendications 4 à 7, **caractérisé en ce que** deux dents (16) adjacentes sont séparées entre elles par un espace interstitiel (17).

9. Assemblage selon la revendication 8, **caractérisé en ce que** l'espace interstitiel (17) présente une largeur minimale (L5) au niveau de l'extrémité libre de la dent (16).

10. Assemblage selon la revendication 9, **caractérisé en ce que** l'espace interstitiel (17) présente au moins un rétrécissement de largeur dans une direction d'extension de la dent (16).

11. Assemblage selon l'une quelconque des revendications 4 à 10, **caractérisé en ce que** la première pièce (10) comprend une ouverture traversante (24) et **en ce que** les dents (16) sont espacées angulairement entre elles de façon régulière suivant une circonférence de l'ouverture traversante (24).

12. Assemblage selon l'une quelconque des revendications 4 à 11, **caractérisé en ce que** la dent (16) est prolongée par une pointe (22) disposée à l'extrémité libre de la dent (16).

13. Assemblage selon l'une quelconque des revendications 4 à 12, **caractérisé en ce que** la première pièce (10) et la deuxième pièce (11) sont des pièces d'un siège d'avion.

## Patentansprüche

1. Verfahren zur Montage eines ersten metallischen Teils (10) und eines zweiten Teils (11) aus einem Verbundwerkstoff mit mindestens einer Matrix (12) und innerhalb der Matrix (12) angeordneten Fasern (13),
wobei das Verfahren mindestens umfasst:
- einen Schritt (201) des Bildens des ersten Teils (10) durch Herstellen einer Mehrzahl von Zähnen (16), die von einer Kontaktfläche (101) des ersten Teils (10) vorstehen, wobei zwei benachbarte Zähne (16) durch einen Zwischenspalt (17) voneinander getrennt werden, wobei die Zähne (16) einen extremen Vorsprung (20) aufweisen, und
- einen Schritt (203) des Pressens des zweiten Teils (11) gegen den ersten Teil (10),
so dass die Fasern (13) des Verbundmaterials in die Zwischenspalte (17) zwischen benachbarten Zähnen (16) eindringen können und die Fasern (13) durch die extremen Vorsprünge der Zähne (16) zurückgehalten werden,
gekennzeichnet, dass die Zähne (16) von einer Kante einer Durchgangsöffnung (24) in dem ersten Teil (10) kommen.

2. Montageverfahren nach Anspruch 1, **dadurch gekennzeichnet, dass** es ferner umfasst:
- einen Schritt (202) des Erhitzens des zweiten Teils (11) vor dem Pressschritt (203) und/oder
- einen Kühlschritt (204) nach dem Pressschritt (204).

3. Montageverfahren nach Anspruch 2, **dadurch gekennzeichnet, dass** der Kühlschritt (204) unter Druck durchgeführt wird.

4. Anordnung mit einem ersten metallischen Teil (10) und einem zweiten Teil (11) aus einem Verbundwerkstoff mit mindestens einer Matrix (12) und innerhalb der Matrix (12) angeordneten Fasern (1, 3),
- wobei der erste Teil (10) eine Mehrzahl von Zähnen (16), die von einer Basis in Verbindung mit einer Kontaktfläche (101) des ersten Teils (10) vorstehen, und ein freies Ende gegenüber der Basis mit einem extremen Vorsprung (20) umfasst, **dadurch gekennzeichnet, dass** die Zähne (16) von einem Rand einer Durchgangsöffnung (24) im ersten Teil (10) kommen.

5. Anordnung nach Anspruch 4, **dadurch gekennzeichnet, dass** der Zahn (16) mindestens einen umlaufenden Vorsprung (21) aufweist.

6. Anordnung nach Anspruch 5, **dadurch gekennzeichnet, dass** das freie Ende des Zahns (16) eine Breite (L4) aufweist, die größer als eine Breite (L3) eines mittleren Teils des Zahns (16) ist.

7. Anordnung nach Anspruch 6, **dadurch gekennzeichnet, dass** die Breite (L3) des mittleren Teils des Zahns (16) geringer als eine Breite der Basis des Zahns (16) ist.

8. Anordnung nach einem der Ansprüche 4 bis 7, **dadurch gekennzeichnet, dass** zwei benachbarte Zähne (16) durch einen Zwischenspalt (17) voneinander getrennt sind.

9. Anordnung nach Anspruch 8, **dadurch gekennzeichnet, dass** der Zwischenspalt (17) am freien Ende des Zahns (16) eine Mindestbreite (L5) aufweist.

10. Anordnung nach Anspruch 9, **dadurch gekennzeichnet, dass** der Zwischenspalt (17) in Erstreckungsrichtung des Zahns (16) mindestens eine Breitenverengung aufweist.

11. Anordnung nach einem der Ansprüche 4 bis 10, **dadurch gekennzeichnet, dass** der erste Teil (10) eine Durchgangsöffnung (24) umfasst, und dass die Zähne (16) in regelmäßigen winkligen Abständen entlang eines Umfangs der Durchgangsöffnung (24) voneinander beabstandet sind.

12. Anordnung nach einem der Ansprüche 4 bis 11, **dadurch gekennzeichnet, dass** der Zahn (16) durch eine Spitze (22) am freien Ende des Zahns (16) verlängert ist.

13. Anordnung nach einem der Ansprüche 4 bis 12, **dadurch gekennzeichnet, dass** das erste Teil (10) und das zweite Teil (11) Teile eines Flugzeugsitzes sind.

## Claims

1. Method for assembling a first metallic part (10) and a second part (11) made of a composite material comprising at least one matrix (12) and fibers (13) arranged inside the matrix (12),
said method comprising at least:
- a step (201) of forming the first part (10) by producing a plurality of teeth (16) projecting from a contact face (101) of the first part (10), two adjacent teeth (16) being separated from each other by an interstitial gap (17), the teeth (16) having an extreme protrusion (20), and
- a step (203) of pressing the second part (11) against the first part (10),
so that the fibers (13) of the composite material can penetrate inside the interstitial gaps (17) between adjacent teeth (16), and the fibers (13) are retained by the extreme protrusions of the teeth (16),
**characterized in that** the teeth (16) come from an edge of a through opening (24) made in the first part (10).

2. Assembling method according to Claim 1, **characterized in that** it further comprises:
- a step (202) of heating the second part (11) before the pressing step (203), and/or
- a cooling step (204) after the pressing step (204).

3. Assembling method according to Claim 2, **characterized in that** the cooling step (204) is carried out under pressure.

4. Assembly comprising a first metallic part (10) and a second part (11) made of a composite material comprising at least one matrix (12) and fibers (13) arranged inside the matrix (12),
- the first part (10) comprising a plurality of teeth (16) projecting from a base in connection with a contact face (101) of the first part (10) and comprising a free end, opposite the base, having an extreme protrusion (20), **characterized in that** the teeth (16) come from an edge of a through opening (24) made in the first part (10).

5. Assembly according to Claim 4, **characterized in that** the tooth (16) comprises at least one circumferential protuberance (21).

6. Assembly according to Claim 5, **characterized in that** the free end of the tooth (16) has a width (L4) greater than a width (L3) of a central part of the tooth (16).

7. Assembly according to Claim 6, **characterized in that** the width (L3) of the central part of the tooth (16) is lower than a width of the base of the tooth (16).

8. Assembly according to any one of the claims 4 to 7, **characterized in that** two adjacent teeth (16) are separated from each other by an interstitial gap (17).

9. Assembly according to Claim 8, **characterized in that** the interstitial gap (17) has a minimum width (L5) at the free end of the tooth (16).

10. Assembly according to Claim 9, **characterized in that** the interstitial gap (17) has at least one narrowing in width in a direction of extension of the tooth (16).

11. Assembly according to any one of the claims 4 to 10, **characterized in that** the first part (10) comprises a through opening (24) and **in that** the teeth (16) are angularly spaced from each other in a regular manner along a circumference of the through opening (24).

12. Assembly according to any one of the claims 4 to 11, **characterized in that** the tooth (16) is extended by a tip (22) at the free end of the tooth (16).

13. Assembly according to any one of the claims 4 to 12, **characterized in that** the first part (10) and the second part (11) are parts of an aircraft seat.
